# FASCICULE DE BREVET EUROPEEN

(11) **EP 0 628 897 B1**
(45) Date de publication et mention de la délivrance du brevet: **06.08.1997**
(21) Numéro de dépôt: 94401073.5
(22) Date de dépôt: 11.05.1994
(51) Int. Cl.: G05D 1/00

(54) **Dispositif de pilotage automatique pour aérodynes**
Gerät zur automatischen Flugzeugsteuerung
Device for automatic aircraft control

(30) Priorité: 07.06.1993 FR 9306864
(43) Date de publication de la demande: 14.12.1994
(73) Titulaire: SEXTANT AVIONIQUE, F-92366 Meudon la Forêt Cédex (FR)
(72) Inventeur: Pierson, Benoit, F-75014 Paris (FR); Guiol, Georges, F-91470 Limours (FR); Limon, Florence, F-91170 Gif sur Yvette (FR)
(74) Mandataire: de Saint-Palais, Arnaud Marie

(56) Documents cités:
- EP-A- 0 186 965
- WO-A-84/00071
- 9TH DIGITAL AVIONICS SYSTEMS CONFERENCE, 15 Octobre 1990, VIRGINIA BEACH pages 306 - 309, XP224577 HERBELLA 'modularity concepts for the multi-path redundant avionics suite(mpras)'

## Description

La présente invention concerne un dispositif de pilotage automatique d'un aérodyne tel que, par exemple, un hélicoptère.

De tels dispositifs ont généralement pour but de décharger le pilote d'un certain nombre de tâches en améliorant les caractéristiques de vol de l'aérodyne qui est généralement instable, et en assurant certaine tâches de pilotage comme le maintien de l'aérodyne dans une certaine trajectoire choisie par le pilote.

Les dispositifs de pilotage automatique destinés à équiper les hélicoptères ont plus particulièrement pour but d'améliorer la stabilité de l'appareil en pilotage manuel, et d'offrir au pilote une impression de plus grande stabilité et d'homogénéité concernant les caractéristiques des effets des différentes gouvernes.

Jusqu'à présent, ces dispositifs effectuaient, pour chacun des trois axes de pilotage, tangage, roulis et lacet, un calcul analogique permettant de commander le jeu d'actionneurs qui agissent sur les gouvernes en fonction des commandes du pilote et des informations fournies par des capteurs.

Généralement, les actionneurs d'un axe de pilotage comprennent un vérin série d'autorité faible dont le mouvement est très rapide, et un vérin de "trim" possédant pleine autorité, dont le mouvement est plus lent, destiné à recentrer la position du vérin série.

Lorsqu'une panne sur un axe de pilotage entraîne une évolution rapide et importante de l'hélicoptère, ou bien lorsque la mission qui lui est destinée requiert une grande attention de l'équipage, on utilise un système redondant pour atteindre le niveau de sécurité requis. Pour cela, on double la chaîne de calcul de chaque axe de pilotage et on installe deux actionneurs en série sur la timonerie de chaque gouverne. De cette manière, si l'une des deux chaînes de commande d'un axe de pilotage tombe en panne, l'autre contre et si la chaîne de commande défaillante est mise hors service, la mission peut être poursuivie.

Cette dernière solution présente les inconvénients d'augmenter l'encombrement du dispositif de pilotage automatique et de multiplier son coût.

Par ailleurs, dans un dispositif mettant en oeuvre un calculateur numérique assurant le pilotage suivant plusieurs axes de commande, en cas de panne de celui-ci, le dispositif de pilotage automatique n'est plus opérationnel pour aucun des axes de pilotage. Cette solution n'est pas donc pas acceptable dans le cadre de certaines missions et pour certains type d'hélicoptères.

Pour résoudre ce problème, on peut disposer un deuxième calculateur en parallèle avec le premier. De cette manière, si l'un des deux calculateurs tombe en panne, l'autre poursuit le pilotage automatique.
Si les contraintes de sécurité requises imposent que l'appareil soit équipé d'un dispositif de pilotage automatique capable de se reconfigurer automatiquement, il est possible d'utiliser trois calculateurs fonctionnant en parallèle de manière à pouvoir déterminer le calculateur défaillant et à assurer en toute circonstance les fonctions de pilotage automatique.
De tels calculateurs ont été décrits dans les demandes de brevet WO-A-84 00071 et EP-A-0 186 965.

Ces solutions présentent également l'inconvénient de multiplier le coût d'un tel dispositif.

La présente invention a plus particulièrement pour but de supprimer ces inconvénients en proposant un dispositif de pilotage automatique d'un aérodyne offrant une fiabilité suffisante dans la plupart des cas pour un coût notablement plus réduit. Ce dispositif fait intervenir un calculateur numérique recevant des informations émanant d'un ensemble de capteurs et assurant la commande d'actionneurs agissant sur les gouvernes.
Ce dispositif est caractérisé en ce que le calculateur comporte au moins un module de calcul comprenant :
- des moyens pour effectuer le pilotage automatique de l'aérodyne selon l'un quelconque des trois axes de pilotage,
- des moyens pour déterminer l'axe de pilotage selon lequel les moyens de pilotage effectuent le pilotage automatique,
- des moyens pour surveiller le pilotage automatique effectué selon l'un quelconque des trois axes de pilotage, pour désactiver le pilotage automatique selon l'axe surveillé et recentrer les actionneurs agissant sur l'axe surveillé, à la suite d'une détection d'anomalie, et
- des moyens pour déterminer l'axe de pilotage surveillé.

Grâce à la rapidité de réaction des systèmes numériques, les actionneurs, et en particulier les vérins série, peuvent ainsi être recentrés rapidement à la suite d'une détection de défaillance. Cette solution permet donc de réduire l'effet d'une panne et de permettre de ce fait de satisfaire aux critères de sécurité.

Selon une particularité de l'invention, le calculateur comprend au moins deux modules de calcul autonomes disposant de ressources matérielles et logicielles pour assurer le pilotage selon respectivement deux axes quelconques des trois axes de pilotage, l'un au moins des deux modules comprenant des moyens pour surveiller le pilotage effectué par l'autre module, pour le déconnecter et recentrer les actionneurs qu'il commande, à la suite d'une détection d'anomalie. Pour cela, chaque module de calcul intègre les fonctions spécifiques à chaque axe de pilotage, et dispose de moyens de reconnaissance des axes de pilotage selon lesquels il doit assurer le pilotage et la surveillance.

Les systèmes numériques tendant à la centralisation des fonctions de calcul, cette solution qui consiste à mettre en oeuvre un module de calcul par axe de pilotage, est contraire aux préjugés de l'homme de l'art. En outre, si l'on souhaitait appliquer les méthodes de redondance classiques, on aboutirait à une multiplicité de calculateurs de forte puissance, et donc, à des coûts trop élevés. Les raisons pour lesquelles ces préjugés peuvent être surmontés tiennent au fait que l'inconvénient d'utiliser un calculateur par axe de pilotage, et donc de puissance plus réduite, est très largement compensé par les avantages relatifs à la flexibilité d'emploi et à la maintenance.

En outre, cette approche modulaire permet de proposer une configuration adaptée à chaque type d'hélicoptère et à chaque type de certification, la configuration minimale ne comportant qu'un seul module de calcul qui assure donc la commande et la surveillance d'un seul axe de pilotage.

Par ailleurs, les moyens de surveillance appliquent les mêmes lois de pilotage que celles utilisées pour le pilotage selon l'axe surveillé. Les ressources matérielles et logicielles supplémentaires pour réaliser ces moyens sont donc minimes.

Selon une particularité de l'invention, chaque module de calcul intègre sur une seule carte, la connectique qui lui permet de s'interfacer directement avec les capteurs et les actionneurs, aucune interconnexion entre modules n'étant prévue à l'intérieur du boîtier réunissant les modules. Ainsi, chaque module intègre un circuit de puissance lui permettant de commander directement les actionneurs.

Grâce à cette configuration, le test et la maintenance du calculateur se limitent au test et à la maintenance d'un seul module de calcul.

Par ailleurs, certains actionneurs sont équipés d'un circuit de commande de puissance. Il faut donc dans ce cas prévoir des modules de calculs sans circuit de commande de puissance.

Dans le but d'améliorer encore la souplesse d'adaptation et donc de réduire les coûts de réalisation et de maintenance d'un tel calculateur, chaque module de calcul comprend au moins un module enfichable regroupant les circuits de commande de puissance et de gestion des entrées et sorties des modules de calcul qui sont le plus susceptibles de varier d'une configuration à une autre.

Toutes ces dispositions permettent d'obtenir un dispositif de pilotage automatique simplifié du point de vue matériel, et donc de coûts de fabrication et de maintenance notablement plus réduits que les systèmes déjà proposés.

Un mode de réalisation du dispositif selon l'invention sera décrit ci-après, à titre d'exemple non limitatif, avec référence aux dessins annexés dans lesquels :
la figure 1 représente schématiquement le dispositif de pilotage automatique au sein d'une chaîne de pilotage selon un axe de pilotage d'hélicoptère ;
la figure 2 représente schématiquement l'architecture matérielle du calculateur connecté aux actionneurs et à l'ensemble de capteurs ;
la figure 3 représente schématiquement l'architecture matérielle d'un module du calculateur ;
la figure 4 montre un module de calcul pourvu d'un module enfichable ;
la figure 5 représente schématiquement un module enfichable ;
les figures 6 à 8 représentent schématiquement les différentes parties du circuit de commande de puissance des actionneurs ;
la figure 9 montre un exemple de circuit de gestion des entrées et sorties ;
les figures 10 à 15 montrent différentes configurations possibles du dispositif.

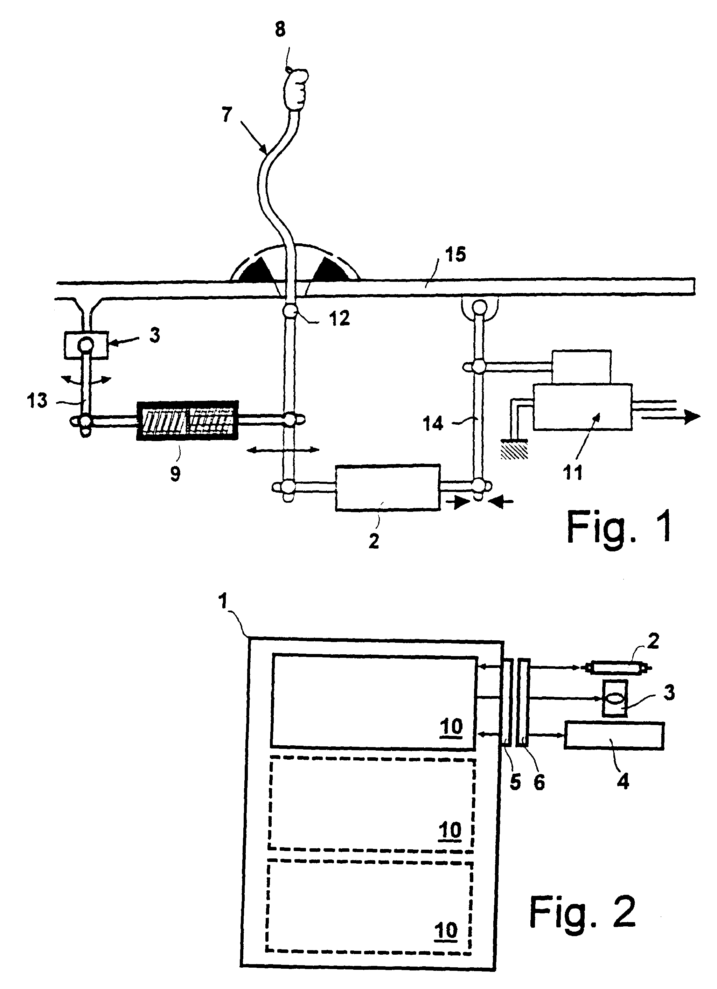

La figure 1 représente les différents éléments de pilotage selon l'un des axes de tangage ou de roulis. Ces éléments comprennent un manche à balais 7 actionné par le pilote, et qui traverse le plancher 15 du poste de pilotage pour pivoter autour d'un axe 12. L'extrémité opposée au manche 7 se prolonge pour former un levier sur lequel agissent d'une part, un dispositif 9 destiné à appliquer sur le manche une force résistante obéissant à une loi d'effort prédéterminée, et d'autre part, un vérin série 2.

Ce dispositif 9 comporte un point d'appui fixé à un levier 13 actionné par un moteur 3, appelé vérin de "trim" et fixé au plancher 15.
L'autre extrémité du vérin série 2 actionne un autre levier 14 qui pivote autour d'un axe solidaire du plancher 15. Ce levier 14 permet d'actionner le système hydraulique 11 qui agit directement sur les gouvernes de l'hélicoptère.
Dans cette structure, le vérin de "trim" 3 est destiné à recentrer lentement en décalant toute la timonerie, la position du vérin série 2 dont le mouvement est très rapide afin de le ramener dans sa position neutre et de lui restituer toute son autorité de pilotage.

Sur la figure 2, le calculateur 1 comprend un module 10 qui échange des informations avec un ensemble 4 représentant les capteurs, le poste de commande de l'hélicoptère et éventuellement un équipement de test.
Il est conçu pour recevoir deux autres modules 10 (représentés en traits interrompus) identiques au premier, permettant de contrôler les deux autres axes de pilotage de l'hélicoptère.

Le module 10 permet de commander directement les vérins série 2 et de "trim" 3 d'un axe de pilotage, en fonction des informations en provenance de l'ensemble 4. Pour cela il possède un connecteur mâle 5 dans lequel vient s'engager un connecteur femelle 6 rassemblant toutes les extrémités des liaisons électriques provenant des capteurs, des actionneurs et du poste de pilotage.

Cette figure montre la configuration minimale offerte par le dispositif de pilotage automatique. Selon cette configuration, le calculateur 1 comprend un seul module 10 dédié au contrôle du pilotage, par exemple, suivant l'axe de lacet.
Cette configuration permet notamment de réaliser un amortisseur de lacet ou une tenue automatique de cap en fonction des informations issues des capteurs disponibles et connectés.

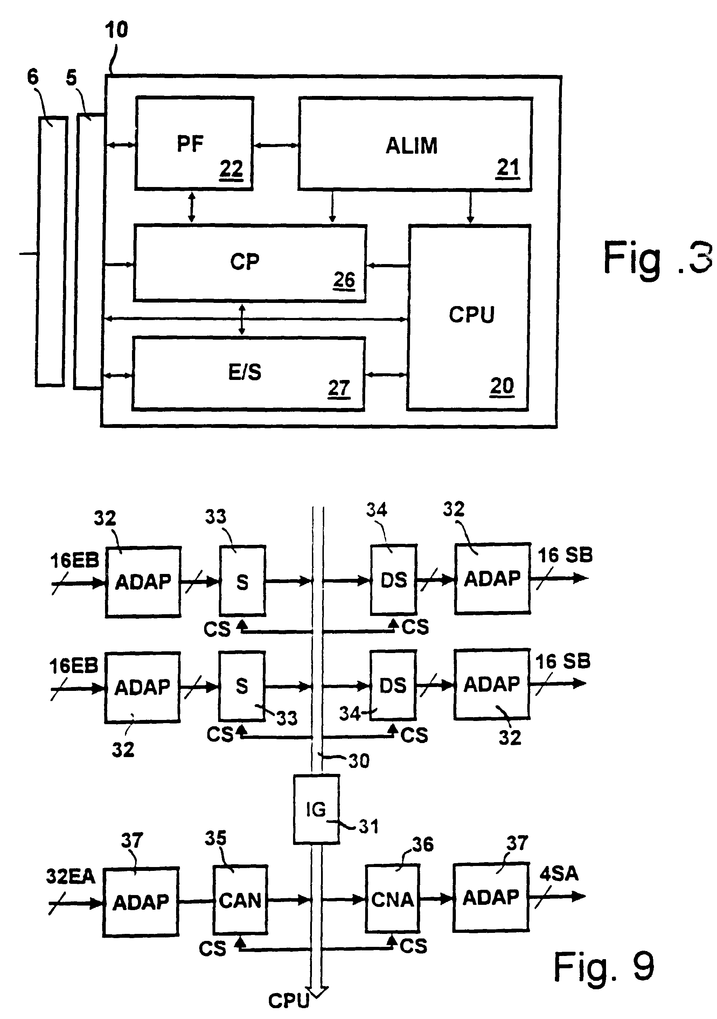

Sur la figure 3, chaque module de calcul 10 comprend :
- un coeur numérique 20 mettant en oeuvre notamment un microprocesseur et des mémoires permettant de stocker un programme et des données ;
- un circuit 27 de gestion des entrées et sorties de données, qu'elles soient numériques ou analogiques en provenance ou à destination des autres modules 10 du calculateur 1 et des autres équipements de l'hélicoptère ;
- un circuit de commande de puissance 26 des actionneurs d'un axe de pilotage qui reçoit du coeur numérique 20 les consignes de commande analogique à appliquer sur les actionneurs de l'axe de pilotage ;
- un circuit d'alimentation 21 permettant d'alimenter en courant continu les différents circuits du module 10 ;
- un circuit de filtrage et de protection 22 contre les effets de la foudre et des rayonnements électromagnétiques qui protège toutes les entrées et sorties du module 10 ; et
- un connecteur multi-points femelle 5 qui coopère avec un connecteur mâle 6 rassemblant toutes les liaisons électriques avec les capteurs 4, les actionneurs 2,3, et le poste de pilotage.

Le circuit de gestion des entrées et sorties 27 peut recevoir notamment des données en provenance des autres équipements de l'hélicoptère, comme par exemple, de la centrale de verticale, des altimètres, des systèmes de navigation par suivi de balises de radionavigation, ou de mesure de la vitesse par rapport à l'air. Ces informations pourront être exploitées par le coeur numérique 20 pour exécuter des fonctions de plus haut niveau, comme par exemple des fonctions de navigation.

Le coeur numérique 20 communique directement avec le poste de pilotage et les équipements de test par une liaison série. Il dispose de toutes les ressources matérielles et logicielles pour assurer les fonctions suivantes :
- l'initialisation du module et du programme,
- l'ordonnancement temps réel et gestion des interruptions,
- la gestion des ports d'entrée/sortie, de la mémoire, et du chargement du programme,
- le calcul de la consigne de pilotage à appliquer sur les actionneurs auxquels il est connecté, à l'aide des lois de pilotage de l'axe considéré,
- la gestion de l'activation du module 10 en fonction de l'état des autres modules 10 présents dans le calculateur 1,
- la surveillance des autres modules 10 du calculateur 1, et de leur inhibition en cas de défaillance,
- la maintenance du système et la gestion des tests à effectuer avant et pendant chaque vol, et
- la gestion des liaisons séries qui lui permettent de communiquer avec les équipements de test et le poste de pilotage.

La fonction de calcul des consignes comprend également des fonctions de pilotage de haut niveau, comme par exemple, des fonctions de navigation.

Comme les lois de pilotage à mettre en oeuvre sont différentes suivant les axes de pilotage, les fonctions de calcul des consignes, de surveillance et de test incluent des fonctions spécifiques à chaque axe de pilotage. Pour déterminer quelles sont les lois à appliquer, chaque module 10 reconnaît l'axe de pilotage qu'il doit traiter et celui qu'il doit surveiller d'après le mode de connexion du connecteur extérieur 6 engagé dans son connecteur 5. De cette manière, aucune manipulation particulière n'est requise pour indiquer à chaque module 10, quel axe de pilotage il doit contrôler.

A cet effet, ce connecteur 6 comprend un ensemble de points de connexion libres qui sont utilisés pour permettre à chaque module de calcul 10 de reconnaître le ou les axes de pilotage auxquels il est connecté, de manière à pouvoir s'auto-configurer. Le coeur numérique de chaque module 10 dispose en outre d'une fonction d'auto-configuration qui se déclenche lors de la mise sous tension du module 10 pour tester les interconnexions qui sont réalisées entre les points de cet ensemble au niveau du connecteur femelle 6, chaque axe de pilotage correspondant à un schéma spécifique d'interconnexions.

Afin de garantir que deux modules ne puissent pas être affectés au même axe, la fonction d'auto-configuration établit un dialogue entre les modules 2a,2b du calculateur 1 au cours duquel chacun émet un code d'identification de l'axe auquel il est connecté et vérifie qu'aucun autre n'a émis le même code.

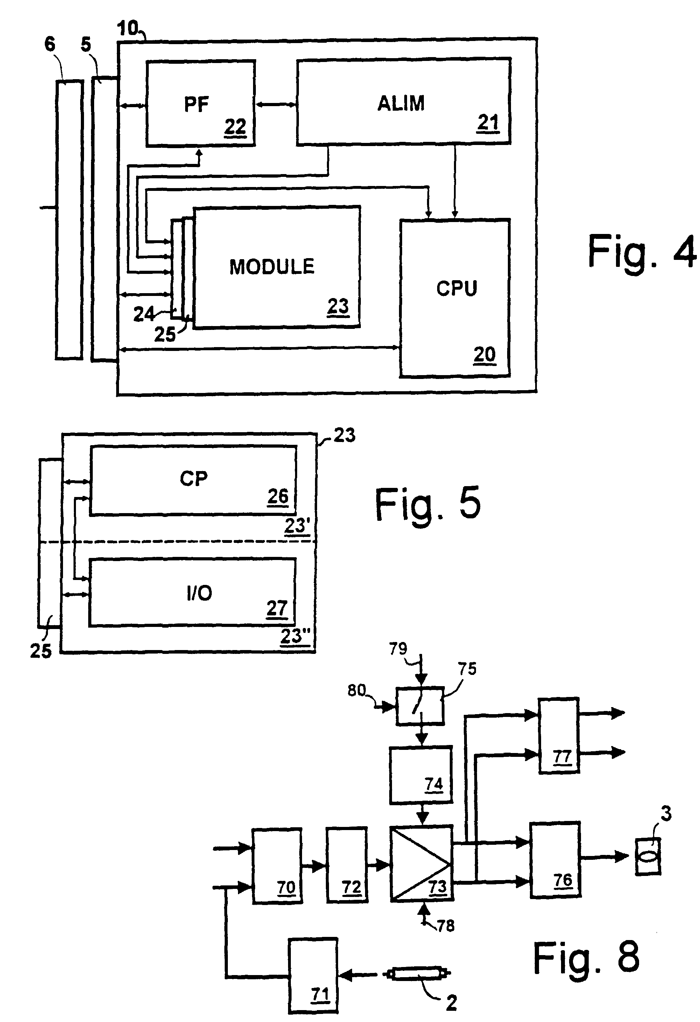

Selon le mode d'exécution représenté sur la figure 4, les circuits de commande de puissance et de gestion des entrées et sorties sont regroupés dans un module enfichable 23. A cet effet, chaque module de calcul 10 comprend un connecteur 24 destiné à recevoir un connecteur 25 dont est pourvu le module enfichable 23.
Sur la figure 5, chaque module enfichable 23 comprend :
- un circuit 27 de gestion des entrées et sorties de données, qu'elles soient numériques ou analogiques, en provenance ou à destination des autres équipements de l'hélicoptère, et éventuellement des autres modules de calcul 10 du calculateur 1 ; et
- un circuit de commande de puissance 26 des actionneurs d'un axe de pilotage qui reçoit la valeur de la position du vérin série, et, du coeur numérique 20, les consignes de commande analogique à appliquer sur les actionneurs de l'axe de pilotage considéré.

Dans le but d'augmenter encore sa souplesse d'adaptation, le module de calcul 10 peut recevoir deux modules enfichables 23' et 23", l'un 23' incluant le circuit de commande de puissance 26, et l'autre 23'' le circuit de gestion des entrées et sorties 27.

Ainsi, dans le cas où les actionneurs sont équipés de leur propre circuit de commande de puissance, le module de calcul reçoit uniquement le module enfichable 23'' incluant le circuit de des entrées et sorties 27 adapté à cette configuration.

Le circuit de gestion des entrées et sorties 27 peut recevoir notamment des données en provenance des autres équipements de l'hélicoptère, comme par exemple, de la centrale de verticale, des altimètres, des systèmes de navigation par suivi de balises de radionavigation, ou de mesure de la vitesse par rapport à l'air. Ces informations pourront être exploitées par le coeur numérique 20 pour exécuter des fonctions de plus haut niveau, comme par exemple des fonctions de navigation.

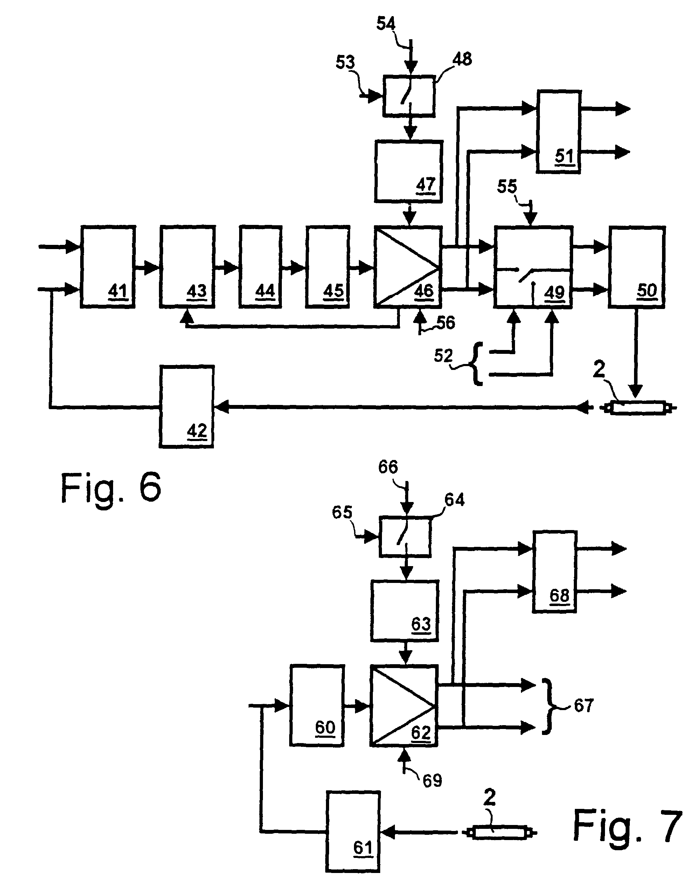

Le circuit représenté sur la figure 6 fait partie du circuit de commande de puissance 26, et permet de commander le moteur du vérin série 2, à partir des consignes élaborées par le coeur numérique 20 et transformées en valeurs analogiques par le circuit de gestion 27 des entrées/sorties.
Ce circuit reçoit également en entrée, la valeur de la position du vérin série 2, qui passe préalablement par un circuit d'adaptation 42.
La consigne analogique et la valeur de la position du vérin sont tout d'abord additionnées par un sommateur 41 dont la valeur résultante attaque un générateur d'impulsions 43.
La sortie du générateur d'impulsions 43 traverse un circuit d'adaptation 44, puis d'isolation galvanique 45, avant d'être traitée par un amplificateur de puissance à pont en H 46.
La valeur amplifiée est ensuite envoyée, au travers d'un relais 49 et d'un filtre en L 50 au moteur du vérin série 2.

L'amplificateur de puissance 46 est par ailleurs mis sous une tension de 28 volts 54 par l'intermédiaire d'un circuit interrupteur 48 et d'un limiteur/disjoncteur de courant 47, et le signal qu'il délivre en sortie est envoyé au coeur numérique 20 pour pouvoir être contrôlée, au travers d'un autre circuit d'isolation galvanique 51.

Le relais 49 permet de sélectionner la commande à envoyer au moteur du vérin série 2 entre celle qui est issue de l'amplificateur 46 et une autre commande 52 délivrée par le dispositif de recentrage du vérin série, représenté sur la figure 7, et situé soit dans le même module de calcul 10, soit dans un autre module du calculateur.
Le circuit de la figure 7, fait également partie du circuit de commande de puissance 26, tout en étant complètement indépendant du circuit décrit précédemment. Il permet de générer la commande de recentrage d'un vérin série 2.
A cet effet, il reçoit en entrée, au travers d'un circuit d'adaptation 61, la valeur de la position de cet autre vérin série 2.

Cette valeur de position est placée à l'entrée d'un comparateur à seuils 60 qui la compare à la position neutre. Le résultat de cette comparaison est traité par un autre amplificateur de puissance à pont en H 62, avant d'être envoyé d'une part, au relais 49, décrit précédemment (figure 6), et d'autre part vers le coeur numérique 20 au travers d'un circuit d'isolation galvanique 68.
Cet amplificateur de puissance 62 est également alimenté en 28 volts 66 par l'intermédiaire d'un interrupteur 64 et d'un abaisseur de tension 63 qui permet de limiter la vitesse de recentrage du vérin série 2.

Ces deux circuits (figures 6 et 7) permettent ainsi, à la fois d'assurer la commande d'un vérin série en fonction de consignes élaborées par le coeur numérique 20, et de commander le recentrage automatique du vérin série en cas de détection d'une incohérence.

Par ailleurs, le recentrage peut être activé manuellement à tout instant par la commande de basculement 55 du relais 49, la commande de recentrage étant, par ailleurs, continuellement élaborée par l'autre module.

En outre, les amplificateurs de puissance à pont en H 46 et 62 utilisés dans les circuits de commande (figure 6) et de recentrage (figure 7) peuvent être inhibés manuellement soit directement par l'intermédiaire des entrées 56 et 69, soit en envoyant un signal 53 et 65 pour actionner l'interrupteur de coupure d'alimentation.

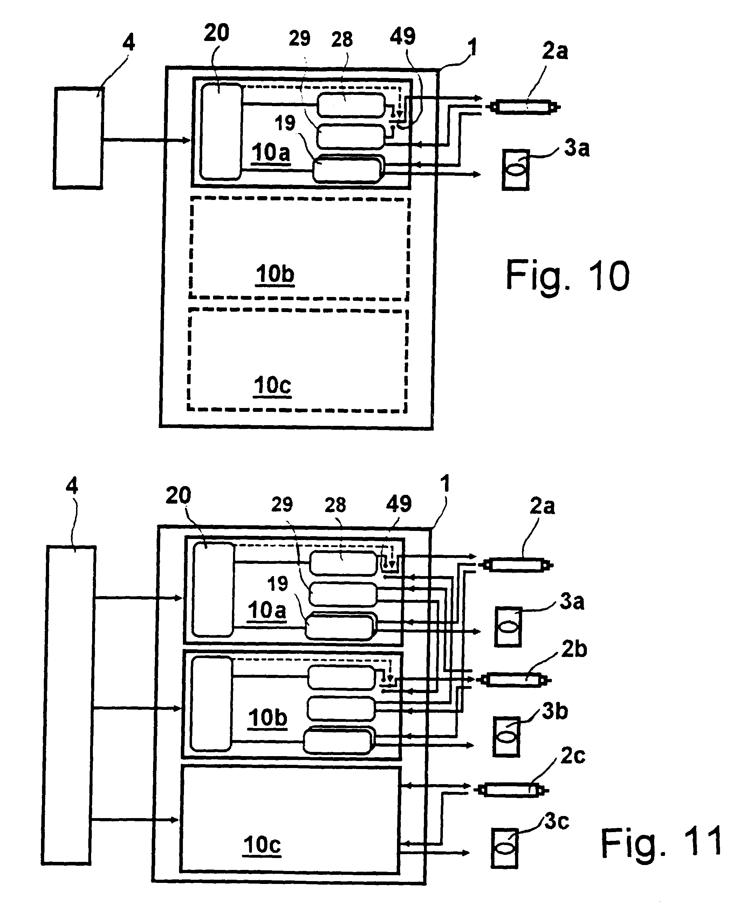

La figure 8 représente le circuit de commande de puissance du moteur du vérin de "trim" 3, qui fait également partie du circuit de commande de puissance 26. Ce circuit reçoit en entrée, d'une part les commandes impulsionnelles élaborées par le coeur numérique qui fournissent le sens et la vitesse de rotation du vérin de "trim" 3, et d'autre part, des commandes logiques élaborées par un dispositif matériel 71, qui indiquent le sens de rotation du vérin de "trim".

Ce dispositif 71 élabore ces commandes de sens à l'aide d'un comparateur à seuils, directement à partir de la position du vérin série 2 associé, auquel il est connecté.
La position du vérin série 2 est ainsi comparée à zéro pour délivrer en sortie un signal logique représentatif du signe de la position du vérin série, relativement à une position centrale.
Il convient ici de préciser que le dispositif 71 est complètement indépendant du coeur numérique. Par ailleurs, il est connecté à un capteur de position du vérin série (2) indépendant de celui qui est utilisé dans l'élaboration de la commande de puissance de ce vérin.

Les commandes impulsionnelles et logiques sont envoyées, au travers d'un étage d'adaptation 70 et d'un étage d'isolation galvanique 72, à un amplificateur à pont en H 73.

Une fois amplifiées, ces commandes attaquent le moteur du vérin de "trim" par l'intermédiaire d'un filtre en L 76, et sont envoyées au coeur numérique 20 par l'intermédiaire d'un circuit d'isolation galvanique 77.
L'amplificateur de puissance est alimenté en 28 volts 79 de manière indépendante du reste du circuit de commande de puissance 26, par l'intermédiaire d'un interrupteur 75 et d'un limiteur/disjoncteur de courant 74.

La commande du vérin de "trim" est ainsi sécurisée de plusieurs manières.
Tout d'abord, l'amplificateur de puissance 73 est conçu de manière à ne délivrer un signal de commande du vérin de "trim" que si les commandes de sens élaborées d'une part par le coeur numérique 20 et d'autre part, par le dispositif matériel 71, indiquent le même sens. Si les sens de déroulement indiqués par ces commandes sont différents, le moteur de "trim" n'est pas commandé et reste donc bloqué.
Ce moteur peut aussi être bloqué en coupant l'alimentation de l'amplificateur de puissance 73 par l'intermédiaire de l'interrupteur 75 commandé par le signal 80, ou en activant la commande d'inhibition 78 de l'amplificateur.
De plus, les commandes de puissance sont isolées galvaniquement par l'étage 77, et sont envoyées au coeur numérique 20 qui peut alors vérifier que les commandes ainsi générées sont cohérentes avec la position du vérin série.
Grâce à ces dispositions, le circuit de commande de puissance comme représenté figure 8 est complètement indépendant du reste du circuit de commande de puissance 26. Ainsi, une panne du coeur numérique 20 ou du circuit de commande de puissance du vérin série 2 entraîne systématiquement le blocage du "trim".

Le circuit de gestion des entrées et sorties 27 représenté sur la figure 10 comprend par exemple deux fois 16 entrées et sorties de données booléennes, respectivement 16EB et 16SB, 32 entrées analogiques 32EA et 4 sorties analogiques 4SA. Les entrées booléennes sont reliées à un sérialiseur 33 par l'intermédiaire d'un circuit d'adaptation 32. Ce circuit comprend également un bus 30 relié au coeur numérique 20 et par lequel transitent les données en entrée et en sortie et des signaux CS de sélection de voie. Lorsque l'un des sérialiseurs 33 reçoit du coeur numérique 20 un signal CS, il transfère les données qu'il reçoit sous forme parallèle en entrée, sous forme série sur le bus 30. Pour commander le transfert de données booléennes vers l'une des sorties 16SB, à destination des autres équipements de l'hélicoptère, le coeur numérique 20 sélectionne l'un des désérialiseurs 34 en lui envoyant un signal CS, ce qui provoque le transfert des données présentes sur le bus 30 vers la sortie 16SB correspondante sous forme parallèle, au travers d'un autre circuit d'adaptation 32.

Le circuit de gestion 27 des entrées et sorties peut également traiter des données analogiques. Pour cela, il comprend un convertisseur analogique/numérique 35 permettant de transformer en valeurs numériques les données analogiques présentées sur l'entrée 32EA et traversant un circuit d'adaptation 37. Pour recevoir ces données analogiques, le coeur numérique 20 envoie par l'intermédiaire du bus 30 un signal de sélection CS à destination de ce convertisseur 35 qui transfère alors sous forme numérique sur le bus 30 les données analogiques qu'il reçoit en entrée.
Le bus 30 comprend deux parties isolées l'une de l'autre par un dispositif d'isolation galvanique 31, de manière à séparer la partie qui gère les données numériques de la partie qui gère les signaux analogiques.

Pour émettre des données analogiques vers les autres équipements de l'hélicoptère, le coeur numérique 20 sélectionne le convertisseur numérique/analogique 36 en lui envoyant un signal CS. Les données qui transitent sur le bus 30 sont alors transformées sous forme analogique et envoyées vers la sortie des données analogiques 4SA par l'intermédiaire d'un circuit d'adaptation 37.

Ce circuit 27 comprend également un circuit d'isolation galvanique permettant d'isoler la portion de bus 30 dans laquelle transitent les données booléennes de celle dans laquelle transitent les données analogiques et qui est reliée au coeur numérique 20.

De la description des circuits de commande de puissance 26 et de gestion des entrées et sorties 27, il apparaît que ces circuits peuvent présenter une architecture très variable d'une configuration de calculateur à une autre pour s'adapter le plus finement possible à l'équipement de l'hélicoptère. C'est pourquoi ils sont avantageusement disposés sur un ou deux modules enfichables 23,23',23", la présence du module 23' dépendant du type d'actionneurs, avec ou sans commande de puissance intégrée, équipant l'hélicoptère.

Il faut noter par ailleurs que le nombre d'entrées et sorties que doit comporter le circuit 27 dépend non seulement de l'équipement de l'hélicoptère et des fonctions réalisées par le coeur numérique, mais aussi des fonctions réalisées par le circuit 26 de commande de puissance.

Il va de soi que les connecteurs 24,25 sont adaptés à toutes les versions possibles de ces deux circuits 26,27 et donc à toutes les configurations de modules enfichables prévues.
Ils comprennent donc une multiplicité de points de connexion qui ne sont pas systématiquement tous utilisés dans toutes les configurations du module enfichable. Dans cette optique, lors de l'initialisation du calculateur, la fonction d'auto-configuration du coeur numérique 20 comprend avantageusement :
- des moyens pour déterminer le nombre et le type, booléen ou analogique, des entrées et des sorties gérées par le module enfichable 23 ou 23",
- des moyens pour détecter la présence du module 23' supportant le circuit de commande de puissance, et
- des moyens pour déterminer quelles sont les commandes de puissance réalisées par le circuit de commande de puissance 26, c'est-à-dire, pour détecter la présence du circuit de commande du vérin série 2, du circuit de commande de recentrage du vérin série 2, et du circuit de commande du vérin de "trim" 3.

Par ailleurs, pour pouvoir s'adapter à toutes les configurations prévues de modules enfichables, le logiciel de commande du coeur numérique 20 comprend toutes les fonctions nécessaires pour contrôler le ou les modules enfichables 23,23'23" qui présentent les configurations les plus complètes.

L'architecture matérielle et logicielle ainsi présentée permet d'adapter très finement le dispositif de pilotage automatique aux caractéristiques de vol de chaque hélicoptère et à la mission à laquelle ce dernier est destiné.

Ainsi, la figure 10 montre une configuration de calculateur 1 qui permet d'obtenir un dispositif de pilotage automatique sur un seul axe de pilotage, par exemple l'axe de lacet. Pour cela, il suffit que le calculateur 1 comprenne un seul module 10a, relié d'une part, à son propre ensemble de capteurs 4, et d'autre part, à ses propres actionneurs 2a,3a.

Comme décrit précédemment, le module 10a comprend notamment une fonction de commande 28 du vérin série 2a, une fonction de commande 19 du vérin de "trim" 3a, et un coeur numérique 20 recevant notamment les informations en provenance des capteurs 4.

Le vérin série 2a présente la particularité d'être très rapide, et en cas de défaillance de la chaîne de commande, il peut se bloquer presque instantanément en butée. Bien entendu, le pilote a toujours la possibilité de reprendre manuellement le contrôle de l'hélicoptère, mais dans le cas de certains types d'hélicoptères, le temps de réaction qui sera exigé du pilote sera trop faible pour rétablir le contrôle de l'appareil en toute sécurité.

Dans le but de supprimer cet inconvénient, le module 10a comprend la fonction de surveillance et de recentrage 29, dont la partie commande de puissance est représentée sur la figure 7. Cette fonction de surveillance est conçue pour comparer la commande issue de l'amplificateur de puissance 46 et de l'étage d'isolation galvanique 51 à la consigne élaborée par le coeur numérique 20. Si ces deux valeurs ne sont pas cohérentes, la fonction de surveillance 29 active le recentrage automatique du vérin série 2a en commandant le basculement du relais 49, et désactive le module 10a qui est alors considéré défaillant.

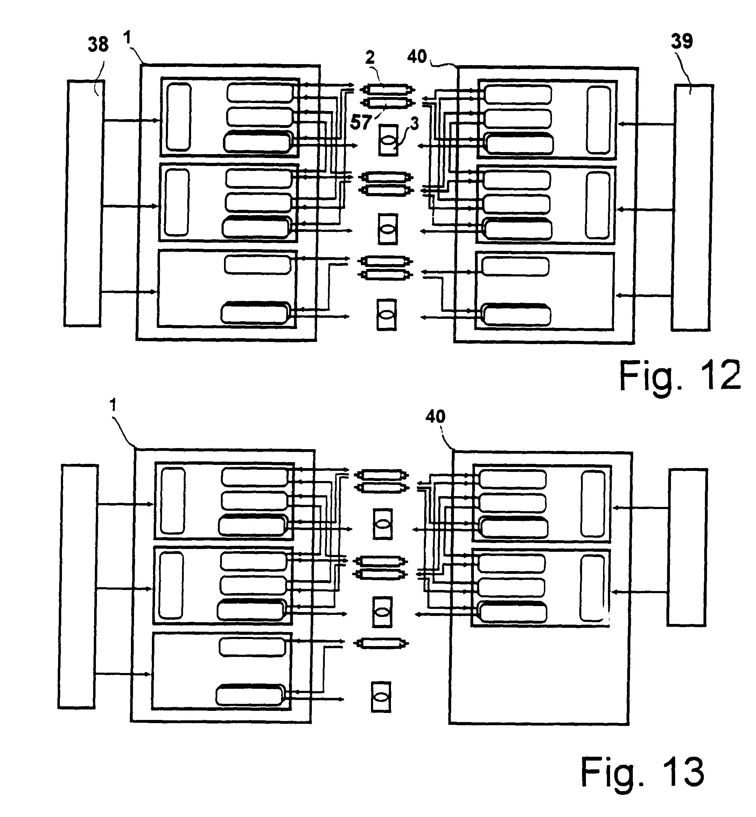

Sur la figure 11, le calculateur 1 comprend trois modules de calcul 10a,10b,10c qui sont reliés d'un côté à un ensemble de capteurs 4 et au poste de commande de l'hélicoptère. Ils permettent de commander directement les vérins série 2a,2b,2c et de "trim" 3a,3b,3c des trois axes de pilotage, tangage, roulis et lacet, en fonction des informations en provenance de l'ensemble de capteurs 4 et du poste de commande.

Chaque module 10a,10b,10c comprend notamment une fonction de commande 28 du vérin série 2a,2b,2c, une fonction de commande 19 du vérin de "trim" 3a,3b,3c, une fonction de sélection 20 des données en provenance de l'ensemble des capteurs 4, relatives à l'axe selon lequel il assure le pilotage, et une fonction 29 de surveillance et de recentrage d'un vérin série.

Les modules 10a et 10b dédiés respectivement aux axes de tangage et de roulis, par exemple, peuvent être interconnectés grâce au connecteur extérieur 5 de manière à permettre un contrôle réciproque des chaînes de commande des vérins série 2a,2b. A cet effet, le circuit de commande de recentrage du module 10a est connecté au capteur de position du vérin série 2b de l'autre module 10b, et la fonction de surveillance du module 10a peut agir sur le relai 49 du module 10b. De son côté la fonction de surveillance et de recentrage du module 10b est connectée de la même manière au module 10a et au vérin série 2a qu'il commande. La fonction de surveillance intégrée au coeur numérique 20 de chaque module 10a,10b est conçue pour traiter les données en provenance des capteurs situés sur l'autre axe. Ainsi, les modules 10a,10b dédiés aux axes de tangage et de roulis sont connectés au même ensemble de capteurs 4. De cette manière, la fonction de sélection 19 des capteurs 4 sélectionne les données en provenance des capteurs placés sur l'autre axe pour les envoyer à la fonction de surveillance 29. Celle-ci élabore ensuite la consigne de commande du vérin série 2b,2a de l'autre chaîne et la compare avec la valeur de la commande de puissance envoyée au vérin série 2b,2a de l'autre module. Si ces deux valeurs sont incohérentes, la fonction de surveillance 29 interrompt le processus de pilotage automatique des vérins 2a,3a, et commande le basculement du relais 49 du second module 10b par la commande 55 pour envoyer au second vérin série 2b, les commandes de recentrage élaborées par le premier module 10a, à l'aide de la valeur de la position du second vérin série 2b.

Comme le processus de pilotage du vérin 2a est interrompu, le coeur numérique 20 du second module 2b qui surveille le premier module 2a va détecter de la même façon une incohérence, ce qui a pour effet d'interrompre le processus de pilotage automatique des vérins 2b,3b, et de déclencher le basculement du relais 49 du premier module 2a pour recentrer le premier vérin 2a

Par ailleurs, le module 2c est connecté indépendamment des deux autres modules 2a,2b, à ses propres actionneurs 2c,3c. Il en résulte que la fonction de surveillance et de recentrage 29 de ce module 10c n'est pas active.

Lorsque les contraintes de sécurité requises par le type et la mission de l'hélicoptère sont très sévères, il est possible de doubler toutes les chaînes de contrôle des axes de pilotage, afin d'éviter que l'un des axes de pilotage ne soit plus contrôlé pour cause de panne (figure 12).
Selon cette configuration, le dispositif comprend donc un deuxième calculateur 40 configuré de la même manière que le calculateur 1, un autre ensemble 39 de capteurs, ainsi qu'un autre vérin série 41 placé en série avec le vérin 2, sur chaque axe de pilotage. Il est à noter que le rôle des vérins de "trim" 3 est secondaire par rapport à celui des vérins série 2, c'est pourquoi il n'est pas nécessaire de les doubler.
De cette manière, les deux chaînes de commande d'un axe actionnent les mêmes gouvernes, et si l'une de ces deux chaînes est défaillante, l'autre continuera à actionner les gouvernes.

Bien entendu, une solution intermédiaire est possible. Ainsi, sur la figure 13, le deuxième calculateur 40 ne comprend que deux modules qui sont respectivement dédiés à l'axe de tangage et à l'axe de roulis. Cette configuration procure une grande sécurité suivant ces deux axes, et une sécurité minimale suivant l'axe de lacet dont la chaîne de contrôle n'est pas doublée.

Comme précédemment mentionné, ce dispositif de pilotage automatique peut réaliser des fonctions de pilotage de haut niveau. Pour cela, le calculateur peut être connecté à un boîtier de commande placé dans le cockpit. Ces fonctions de pilotage concernent :
- le maintien de l'appareil à une altitude constante,
- le maintien de la vitesse de l'appareil,
- le maintien d'un cap,
- le suivi de balises de radionavigation, ...

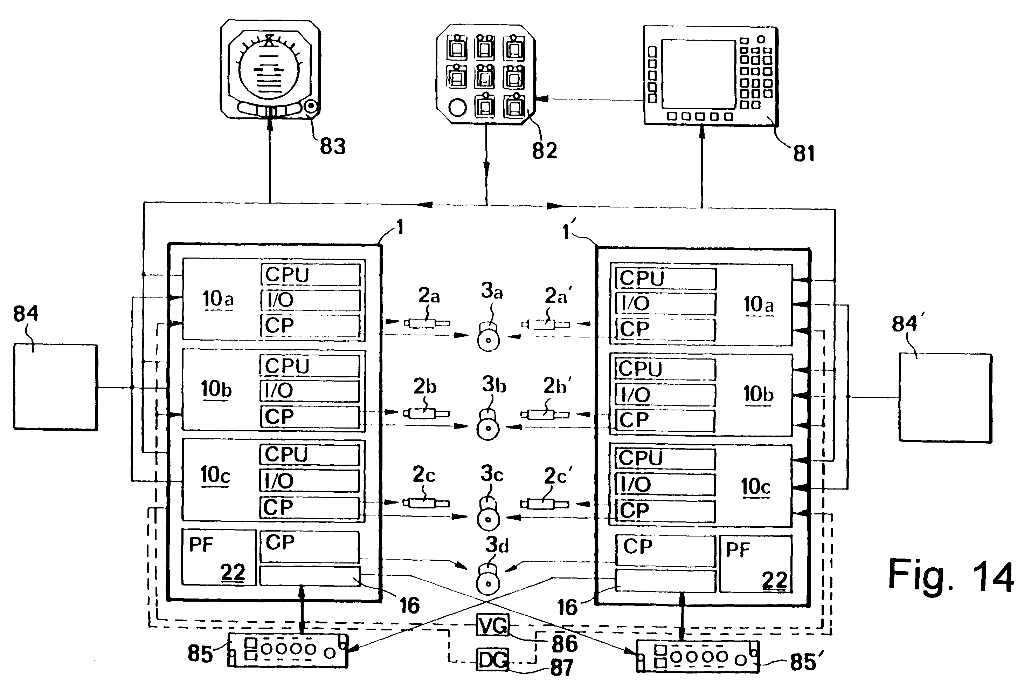

Ainsi, le dispositif de pilotage automatique représenté sur la figure 14 assure le pilotage suivant quatre axes, à savoir tangage, roulis, lacet et collectif, et afin d'assurer une grande sécurité de fonctionnement, il comprend deux chaînes de commande des gouvernes par axe de pilotage.

Pour cela, ce dispositif comprend deux calculateurs 1 et 1', chacun étant équipé de trois modules de calcul 10a,10b,10c assurant le pilotage automatique suivant respectivement les axes de tangage, roulis et lacet. Chacun de ces axes de pilotage est équipé de deux vérins série 2a,2a' - 2b,2b' - 2c,2c' montés en série sur la timonerie de la gouverne correspondante et d'un vérin de "trim" 3a,3b,3c. les deux vérins série de chaque axe de pilotage sont contrôlés respectivement par les deux calculateurs 1,1', tandis que chaque vérin de "trim" est actionné par les deux calculateurs.

Les deux calculateurs 1,1' reçoivent par l'intermédiaire d'un réseau utilisé suivant un protocole particulier tel que ARINC 429, des informations en provenance :
- d'un calculateur de navigation 81,
- d'un calculateur directeur de vol qui assure le pilotage à partir des consignes fournies par le calculateur de navigation,
- d'un indicateur d'attitude 83,
- d'une centrale de référence horizontale et d'attitude respective 84,84', et
- éventuellement d'une référence gyroscopique d'attitude verticale et directionnelle 86,87.

Les modules de calcul 10a,10b,10c sont équipés chacun d'un coeur numérique "CPU", d'un module de gestion des entrées et sorties "I/O" et d'un module de commande de puissance "CP". Par ailleurs, les modules de calcul des deux calculateurs 1,1' sont interconnectés de manière à, d'une part, commander l'un des deux vérins série, par exemple 2a,2b,2c et le vérin de "trim" 3a,3b,3c de l'axe de pilotage correspondant, et d'autre part, surveiller le bon fonctionnement de la chaîne de commande de l'autre vérin série 2a',2b',2c'. De cette manière, si une incohérence apparait entre les chaînes de commande des deux vérins série 2a,2a' d'un même axe de pilotage, ces deux vérins série sont recentrés automatiquement, et le pilotage automatique suivant l'axe correspondant est mis en veille.

Avantageusement, les calculateurs 1,1' sont équipés d'un circuit filtrage et de protection contre les effets de la foudre et des rayonnements électromagnétiques 22, d'une carte d'interface 16 avec un poste de commande 85,85' et d'un module de commande de puissance "CP" permettant d'actionner le vérin de "trim" 3d de commande du collectif de l'hélicoptère.

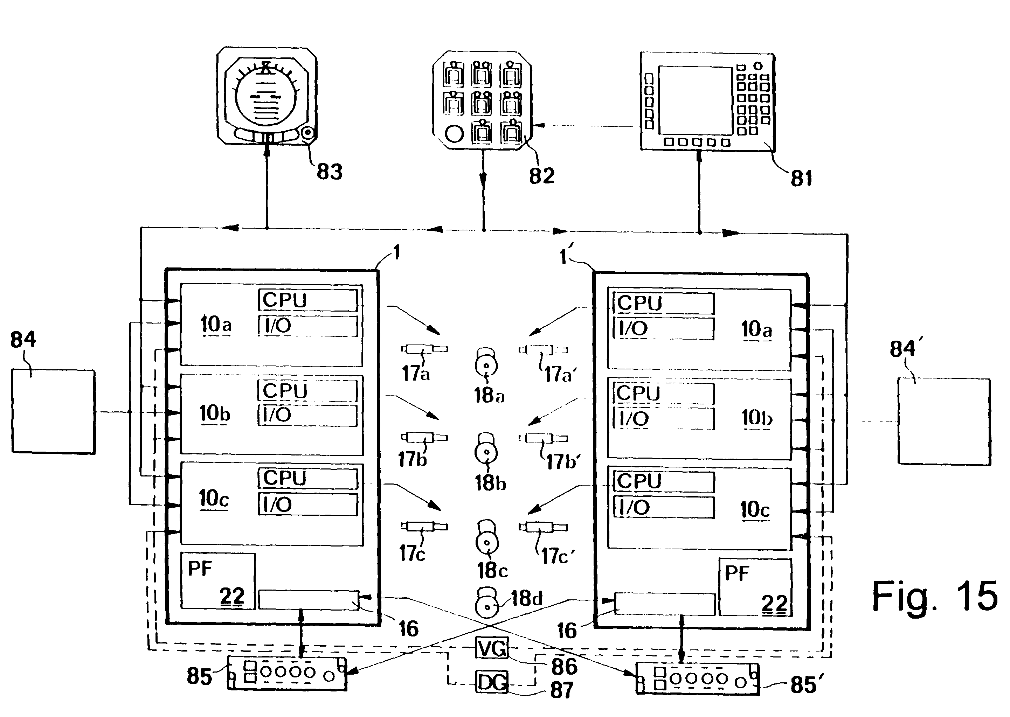

La configuration représentée sur la figure 15 met en oeuvre des actionneurs de type vérin série 17a,17a' - 17b,17b' - 17c,17c' et de "trim" 18a,18b,18c dits "intelligents", c'est-à-dire qu'ils sont équipés de leur propre circuit de commande de puissance. Ainsi les modules de calcul 10a, 10b,10c équipant les deux calculateurs 1,1' n'ont pas besoin de module de circuit de puissance enfichable et toutes les connexions des deux calculateurs avec les actionneurs et les autres équipements de l'hélicoptère sont réalisées par le même réseau.
Ainsi, grâce à la modularité des calculateurs 1,1', il est possible de simplifier de manière importante le dispositif de la figure 12, tout en conservant les mêmes fonctionnalités et le même niveau de sécurité.

## Revendications

1. Dispositif de pilotage automatique d'un aérodyne faisant intervenir au moins un calculateur numérique recevant des informations émanant d'un ensemble de capteurs et assurant la commande d'actionneurs agissant sur les gouvernes,
caractérisé en ce que le calculateur (1) comporte au moins un module de calcul (10) comprenant :
- des moyens (28,19) pour effectuer le pilotage automatique de l'aérodyne selon l'un quelconque des trois axes de pilotage,
- des moyens pour déterminer l'axe de pilotage selon lequel les moyens de pilotage effectuent le pilotage automatique,
- des moyens (29) pour surveiller le pilotage automatique effectué selon l'un quelconque des trois axes de pilotage, pour désactiver le pilotage automatique selon l'axe surveillé et recentrer les actionneurs (2) agissant sur l'axe surveillé, à la suite d'une détection d'anomalie, et
- des moyens pour déterminer l'axe de pilotage surveillé.

2. Dispositif selon la revendication 1,
caractérisé en ce que le calculateur (1) comporte au moins deux modules (10a,10b) de calcul qui comprennent des moyens (28,19) pour assurer le pilotage selon deux axes quelconques respectifs des trois axes de pilotage, l'un (10a) au moins des deux modules (10a,10b) étant connecté aux capteurs (4) et aux actionneurs (2b) du second module (10b), et comprenant des moyens pour surveiller le bon fonctionnement de l'autre module (2b), pour le déconnecter et recentrer les actionneurs (2b) commandés par l'autre module (10b), à la suite d'une détection d'anomalie.

3. Dispositif selon la revendication 3,
caractérisé en ce que les deux modules (10a,10b) sont identiques, et sont chacun connectés aux capteurs (4) et aux actionneurs (2a,2b) de l'autre module (10b,10a) de manière à surveiller le bon fonctionnement de ce dernier, à le déconnecter et à recentrer les actionneurs (2b,2a) commandés par l'autre module (10b,10a), à la suite d'une détection d'anomalie, chaque module (10a,10b) comprenant des moyens de reconnaissance des deux axes de pilotage selon lesquels ils doivent assurer respectivement le pilotage et la surveillance et pour se rendre spécifique de ces deux axes.

4. Dispositif selon l'une des revendications précédentes,
caractérisé en ce que les actionneurs (2a,3a) correspondant à chaque axe de pilotage comportent un vérin série (2a) et d'un vérin de "trim" (3a) qui permet de recentrer la position du vérin série (2a), et en ce que chaque module comprend une fonction de commande du vérin série (28), une fonction de commande du vérin de "trim" (19), et une fonction de surveillance et de recentrage (29) d'un vérin série (2a ou 2b).

5. Dispositif selon l'une des revendications précédentes,
caractérisé en ce que chaque module de calcul (10) comprend :
- un coeur numérique 20 comportant un microprocesseur commandé par un logiciel identique quelque soit les axes selon lesquels il doit assurer le pilotage et la surveillance,
- un circuit de commande de puissance (26) qui lui permet de commander directement les actionneurs (2,3) d'un axe de pilotage,
- un circuit d'alimentation (21),
- un circuit de gestion des entrées et sorties (27), et
- un circuit de filtrage et de protection contre les effets de la foudre et des rayonnements électromagnétiques (22).

6. Dispositif selon la revendication 5, caractérisé en ce que chaque module de calcul (10) comprend au moins un module enfichable (23) regroupant le circuit (27) de gestion des entrées et des sorties du module de calcul (10), et éventuellement, le circuit (26) de commande de puissance des actionneurs (2,3).

7. Dispositif selon l'une des revendications 5 et 6,
caractérisé en ce que chaque module de calcul (10) comprend deux modules enfichables (23',23"), l'un (23') incluant le circuit (26) de commande de puissance des actionneurs, et l'autre (23") le circuit (27) de gestion des entrées et des sorties du module de calcul (10).

8. Dispositif selon l'une des revendications 6 et 7,
caractérisé en ce que chaque module de calcul (10) comprend en outre :
- des moyens pour déterminer le nombre et le type, booléen ou analogique, des entrées et des sorties gérées par le module enfichable (23 ou 23"),
- des moyens pour détecter la présence du module (23') supportant le circuit de commande de puissance (26), et
- des moyens pour déterminer quelles sont les commandes de puissance réalisées par le circuit de commande de puissance (26).

9. Dispositif selon l'une des revendications 5 à 8,
caractérisé en ce que le circuit (27) de gestion des entrées et des sorties du module enfichable (23) comprend des moyens (33 à 36) pour recevoir et émettre des données numériques et analogiques.

10. Dispositif selon l'une des revendications 4 à 9,
caractérisé en ce que le logiciel de commande du coeur numérique (20) comprend toutes les fonctions nécessaires pour contrôler le ou les modules enfichables (23,23',23") qui présentent les configurations les plus complètes.

11. Dispositif selon la revendication 10,
caractérisé en ce que le circuit de commande de puissance (26) comprend des moyens pour élaborer les commandes de puissance du vérin série (respectivement 2a,2b) et du vérin de "trim" (respectivement 3a,3b) correspondant à l'axe selon lequel il assure le pilotage, à partir de consignes calculées par le coeur numérique (20) à l'aide des lois de pilotage concernant ledit axe, et à partir de la valeur de la position du vérin série (respectivement 2a,2b).

12. Dispositif selon l'une des revendications 10 et 11, caractérisé en ce que le coeur numérique (20) de l'un (10a) quelconque des deux modules de calcul (10a,10b) comprend des moyens pour élaborer la commande à appliquer au vérin série (2b) commandé par l'autre module (10b), pour la comparer avec celle qui est appliquée par ce dernier (10b), et, lorsque ces deux commandes sont incohérentes, pour interrompre le processus de pilotage automatique, et déclencher le recentrage du vérin série (2b) commandé par l'autre module (10b).

13. Dispositif selon l'une des revendications 10 à 12,
caractérisé en ce que le circuit de commande de puissance (26), commandant un premier vérin série (2a), comprend d'une part, un circuit qui élabore en permanence la commande de recentrage d'un second vérin série (2b), et d'autre part, un relais (49) permettant d'appliquer au premier vérin série (2a), soit la commande qu'il a élaborée, soit la commande de recentrage élaborée par un autre module (10b).

14. Dispositif selon la revendication 13,
caractérisé en ce que le relais (49) de l'un (10a) quelconque des deux modules de calcul (10a,10b) est commandé par l'autre module de calcul (10b) qui effectue la surveillance du premier module (10a).

15. Dispositif selon l'une des revendications 3 à 14,
caractérisé en ce que les modules (10a,10b) sont interconnectés par leurs connecteurs (5) respectifs pour assurer leur surveillance réciproque et le recentrage des vérins série (2a,2b).

16. Dispositif selon l'une des revendications précédentes,
caractérisé en ce qu'il comprend des moyens (6) pour définir un code d'identification propre à chaque axe de pilotage, chaque module (10a,10b,10c) comprenant des moyens de lecture de ce code d'identification, afin de s'auto-configurer en fonction de l'axe selon lequel il doit assurer le pilotage, et celui qu'il doit surveiller.

17. Dispositif selon l'une des revendications 3 à 16,
caractérisé en ce qu'il comprend deux calculateurs (1,40) identiques comprenant chacun au moins deux modules de calcul (10) assurant le pilotage selon respectivement deux axes, le pilotage selon chaque axe étant simultanément assuré par deux modules (10) appartenant respectivement aux deux calculateurs (1,40), et qui commandent un vérin de trim (3) et respectivement, deux vérins série (2,41) montés en série, à partir d'informations issues de deux ensembles de capteurs (38,39) respectifs.

## Patentansprüche

1. Automatische Steuervorrichtung für ein Luftfahrzeug, die mindestens einen digitalen Rechner verwendet, der von einer Einheit von Meßsonden kommende Informationen empfängt und die Steuerung von auf die Steuerflächen wirkenden Betätigungsgliedern gewährleistet,
dadurch gekennzeichnet, daß der Rechner (1) mindestens einen Rechenmodul (10) aufweist, der enthält:
- Mittel (28, 19), um die automatische Steuerung des Luftfahrzeugs gemäß einer beliebigen der drei Flugsteuerachsen durchzuführen,
- Mittel, um die Flugsteuerachse zu bestimmen, gemäß der die Steuermittel die automatische Steuerung durchführen,
- Mittel (29), um die gemäß einer beliebigen der drei Flugsteuerachsen durchgeführte automatische Steuerung zu überwachen, um nach der Erfassung einer Anomalie die automatische Steuerung der überwachten Achse zu desaktivieren und die auf die überwachte Achse wirkenden Betätigungsglieder (2) neu zu zentrieren, und
- Mittel, um die überwachte Flugsteuerachse zu bestimmen.

2. Vorrichtung nach Anspruch 1, dadurch gekennzeichnet, daß der Rechner (1) mindestens zwei Rechenmoduln (10a, 10b) aufweist, die Mittel (28, 19) besitzen, um die Steuerung gemäß zwei beliebigen der drei Flugsteuerachsen durchzuführen, wobei mindestens einer (10a) der beiden Moduln (10a, 10b) mit den Meßsonden (4) und den Betätigungsgliedern (2b) des zweiten Moduls (10b) verbunden ist und Mittel aufweist, um den reibungslosen Betrieb des anderen Moduls (10b) zu überwachen, um ihn nach der Erfassung einer Anomalie abzuschalten und die von dem anderen Modul (10b) gesteuerten Betätigungsglieder (2b) neu zu zentrieren.

3. Vorrichtung nach Anspruch 1, dadurch gekennzeichnet, daß die beiden Moduln (10a, 10b) gleich und je mit den Meßsonden (4) und den Betätigungsgliedern (2a, 2b) des anderen Moduls (10a, 10b) verbunden sind, um dessen reibungslosen Betrieb zu überwachen, ihn nach der Erfassung einer Anomalie abzuschalten und die vom anderen Modul (10b, 10a) gesteuerten Betätigungsglieder (2b, 2a) neu zu zentrieren, wobei jeder Modul (10a, 10b) Mittel zur Erkennung der beiden Flugsteuerachsen aufweist, gemäß denen er die Steuerung und die Überwachung gewährleisten soll, und um diesen beiden Achsen spezifisch zu entsprechen.

4. Vorrichtung nach einem der vorhergehenden Ansprüche, dadurch gekennzeichnet, daß die jeder Flugsteuerachse entsprechenden Betätigungsglieder (2a, 3a) einen Serien-Zylinder (2a) und einen "Trimm"-Zylinder (3a) aufweisen, der es ermöglicht, die Position des Serien-Zylinders (2a) neu zu zentrieren, und daß jeder Modul eine Steuerfunktion (28) des Serien-Zylinders, eine Steuerfunktion (19) des "Trimm"-Zylinders und eine Funktion (29) der Überwachung und Neuzentrierung eines Serien-Zylinders (2a oder 2b) enthält.

5. Vorrichtung nach einem der vorhergehenden Ansprüche, dadurch gekennzeichnet, daß jeder Rechenmodul (10) aufweist:
- einen digitalen Kern (20), der einen von der gleichen Software gesteuerten Mikroprozessor aufweist, unabhängig von den Achsen, gemäß denen er die Steuerung und die Überwachung durchführen soll,
- eine Leistungssteuerschaltung (26), die es ihm erlaubt, die Betätigungsglieder (2, 3) einer Flugsteuerachse direkt zu steuern,
- eine Speiseschaltung (21),
- eine Ein- und Ausgangs-Steuerschaltung (27), und
- eine Filter- und Schutzschaltung (22) gegen die Wirkungen von Blitzschlag und elektromagnetischen Strahlungen.

6. Vorrichtung nach Anspruch 5, dadurch gekennzeichnet, daß jeder Rechenmodul (10) mindestens einen einsteckbaren Modul (23) enthält, der die Ein- und Ausgangs-Steuerschaltung (27) des Rechenmoduls (10) und ggf. die Leistungssteuerschaltung (26) der Betätigungsglieder (2, 3) umfaßt.

7. Vorrichtung nach einem der Ansprüche 5 und 6, dadurch gekennzeichnet, daß jeder Rechenmodul (10) zwei Einsteckmoduln (23' 23") aufweist, von denen einer (23') die Schaltung (26) zur Leistungssteuerung der Betätigungsglieder und der andere (23") die Ein- und Ausgangs-Steuerschaltung (27) des Rechenmoduls (10) enthält.

8. Vorrichtung nach einem der Ansprüche 6 und 7, dadurch gekennzeichnet, daß jeder Rechenmodul (10) außerdem aufweist:
- Mittel, um die Anzahl und die logische oder analoge Art der vom Einsteckmodul (23 oder 23") verwalteten Eingänge und Ausgänge zu bestimmen,
- Mittel, um das Vorhandensein des Moduls (23') zu erfassen, das die Leistungssteuerschaltung (26) trägt,
- und Mittel, um zu bestimmen, welches die von der Leistungssteuerschaltung (26) durchgeführten Befehle sind.

9. Vorrichtung nach einem der Ansprüche 5 bis 8, dadurch gekennzeichnet, daß die Ein- und Ausgangs-Steuerschaltung (27) des Einsteckmoduls (23) Mittel (33 bis 36) aufweist, um digitale und analoge Daten zu empfangen und zu senden.

10. Vorrichtung nach einem der Ansprüche 4 bis 9, dadurch gekennzeichnet, daß die Steuer-Software des digitalen Kerns (20) alle Funktionen aufweist, die notwendig sind, um den oder die Einsteckmoduln (23, 23', 23") zu steuern, die die vollständigsten Konfigurationen aufweisen.

11. Vorrichtung nach Anspruch 10, dadurch gekennzeichnet, daß die Leistungssteuerschaltung (26) Mittel aufweist, um die Leistungssteuerungen des Serien-Zylinders (2a bzw. 2b) und des "Trimm"-Zylinders (3a bzw. 3b) entsprechend der Achse, gemäß der er die Steuerung gewährleistet, auszuarbeiten, ausgehend von Sollwerten, die vom digitalen Kern (20) mit Hilfe der diese Achse betreffenden Steuergesetze und ausgehend vom Wert der Position des Serien-Zylinders (2a bzw. 2b) berechnet werden.

12. Vorrichtung nach einem der Ansprüche 10 und 11, dadurch gekennzeichnet, daß der digitale Kern (20) eines beliebigen (10a) der beiden Rechenmoduln (10a, 10b) Mittel aufweist, um die an den vom anderen Modul (10b) gesteuerten Serien-Zylinder (2b) anzulegende Steuerung auszuarbeiten, um sie mit der zu vergleichen, die von diesem Modul (10b) angelegt wird, und um, wenn diese beiden Steuerungen inkohärent sind, den Vorgang der automatischen Steuerung zu unterbrechen und die Neuzentrierung des Serien-Zylinders (2b) auszulösen, der vom anderen Modul (10b) gesteuert wird.

13. Vorrichtung nach einem der Ansprüche 10 bis 12, dadurch gekennzeichnet, daß die Leistungssteuerschaltung (26), die einen ersten Serien-Zylinder (2a) steuert, einerseits eine Schaltung, die permanent die Steuerung der Neuzentrierung eines zweiten Serien-Zylinders (2b) ausarbeitet, und andererseits ein Relais (49) aufweist, das es ermöglicht, an den ersten Serien-Zylinder (2a) entweder die Steuerung, die er ausgearbeitet hat, oder die von einem anderen Modul (10b) ausgearbeitete Steuerung der Neuzentrierung anzulegen.

14. Vorrichtung nach Anspruch 13, dadurch gekennzeichnet, daß das Relais (49) eines beliebigen (10a) der beiden Rechenmoduln (10a, 10b) vom anderen Rechenmodul (10b) gesteuert wird, der die Überwachung des ersten Moduls (10a) durchführt.

15. Vorrichtung nach einem der Ansprüche 3 bis 14, dadurch gekennzeichnet, daß die Moduln (10a, 10b) über ihre Verbinder (5) miteinander verbunden sind, um ihre gegenseitige Überwachung und die Neuzentrierung der Serien-Zylinder (2a, 2b) durchzuführen.

16. Vorrichtung nach einem der vorhergehenden Ansprüche, dadurch gekennzeichnet, daß sie Mittel (6) aufweist, um einen jeder Flugsteuerachse eigenen Identifikationskode zu definieren, wobei jeder Modul (10a, 10b, 10c) Mittel zum Lesen dieses Identifikationskodes aufweist, um sich selbst zu konfigurieren in Abhängigkeit von der Achse, gemäß der er die Steuerung durchführen soll, und der, die er überwachen soll.

17. Vorrichtung nach einem der Ansprüche 3 bis 16, dadurch gekennzeichnet, daß sie zwei identische Rechner (1, 40) aufweist, die je mindestens zwei Rechenmoduln (10) aufweisen und die Steuerung gemäß je zwei Achsen gewährleisten, wobei die Steuerung gemäß jeder Achse gleichzeitig von zwei Moduln (10) durchgeführt wird, die zu den beiden Rechnern (1 bzw. 40) gehören und die einen "Trimm"-Zylinder (3) und zwei in Reihe montierte Serien-Zylinder (2, 41) steuern ausgehend von Informationen, die von zwei Einheiten von Meßsonden (38 bzw. 39) kommen.

## Claims

1. An automatic piloting device for an aerodyne using at least one digital computer receiving information from a set of sensors and controlling actuators acting on the flight control surfaces, characterized in that said computer (1) comprises at least a computing module (10) comprising :
- means (28, 19) for automatic piloting of the aerodyne according to any one of the three piloting axes,
- means for determining the piloting axis according to which the piloting means perform automatic piloting,
- means (29) for monitoring the automatic piloting performed according to any one of the three piloting axes for de-activating automatic piloting according to the monitored axis and recentering the actuators (2) acting on the monitored axis, following detection of a failure, and
- means for determining the monitored piloting axis.

2. The device as claimed in claim 1,
characterized in that said computer (1) comprises at least two computing modules (10a, 10b) with means (28, 19) for ensuring piloting according to any two of said three piloting axes, at least one (10a) of said two modules (10a, 10b) being connected to the sensors (4) and the actuators (2b) of said second module (10b), and comprising a means for monitoring the service quality of the other module (10b), for disconnecting it and for recentering the actuators (2b) controlled by said other module (10b), subsequent to detection of a failure.

3. The device as claimed in claim 2,
characterized in that said two modules (10a, 10b) are identical, and are each connected to the sensors (4) and actuators (2a, 2b) of said other module (10b, 10a) so as to monitor the service quality of the latter, to disconnect it and to recenter the actuators (2b, 2a) controlled by said other module (10b, 10a) , subsequent to detection of a failure, each module (10a, 10b) comprising a means for recognizing the two piloting axes according to which they respectively ensure piloting and monitoring, and for making themselves specific to these two axes.

4. The device as claimed in one of the preceding claims,
characterized in that said actuators (2a, 3a) corresponding to each piloting axis comprise a series thrustor (2a) and a trim thrustor (3a) enabling recentering of the position of said series thrustor (2a), and in that each module comprises a series thrustor command function (28), a trim thrustor command function (19), and a series thrustor (2a or 2b) monitoring and recentering function (29).

5. The device as claimed in one of the preceding claims,
characterized in that each computing module (10) comprises:
- a digital heart (20) comprising a microprocessor controlled by identical software irrespective of the axes according to which it must pilot and that it must monitor,
- a power control circuit (26) enabling it to directly control the actuators (2, 3) of a piloting axis,
- a feed circuit (21),
- an I/O management circuit (27), and
- a filtering and protection circuit (22) for protection against the effects of lightning and electromagnetic radiation.

6. The device as claimed in claim 5,
characterized in that each computing module (10) comprises at least one plug-in module (23) grouping together the circuit (27) managing the inputs and outputs of said computing module (10), and possibly, the circuit (26) controlling power to said actuators (2, 3).

7. The device as claimed in one of claims 5 and 6,
characterized in that each computing module (10) comprises two plug-in modules (23', 23"), one (23') including said circuit (26) controlling power to said actuators, and the other (23") including said circuit (27) managing said inputs and outputs of said computing module (10).

8. The device as claimed in one of claims 6 and 7,
characterized in that each computing module (10) further comprises:
- a means for determining the number and type (Boolean or analog) of the inputs and outputs managed by said plug-in module (23 or 23"),
- a means for detecting the presence of the module (23') supporting said power control circuit (26), and
- a means for determining which power commands are performed by said power control circuit (26).

9. The device as claimed in one of claims 5 to 8,
characterized in that said circuit (27) managing said inputs and outputs of said plug-in module (23) comprises a means (33 to 36) for receiving and transmitting digital and analog data.

10. The device as claimed in one of claims 4 to 9,
characterized in that the software controlling said digital heart (20) comprises all the functions required to control the plug-in module(s) (23, 23', 23") with the most complete configurations.

11. The device as claimed in claim 10,
characterized in that said power control circuit (26) comprises a means for generating the power commands for the series thrustor (respectively 2a 2b) and trim thrustor (respectively 3a, 3b) corresponding to the axis according to which it is piloting, from instructions computed by the digital heart (20) by means of the piloting laws concerning said axis, and from the value of the position of said series thrustor (respectively 2a, 2b).

12. The device as claimed in one of claims 10 and 11,
characterized in that the digital heart (20) of any one (10a) of said two computing modules (10a, 10b) comprises a means for generating the command to be applied to said series thrustor (2b) controlled by said other module (10b), for comparing it with the command applied by the latter (10b), and, when these two commands are inconsistent, for interrupting the automatic piloting process, and for triggering the recentering of said series thrustor (2b) controlled by said other module (10b).

13. The device as claimed in one of claims 10 to 12,
characterized in that said power control circuit (26), controlling a first series thrustor (2a), comprises, on the one hand, a circuit permanently generating the recentering command of a second series thrustor (2b), and, on the other hand, a relay (49) enabling either the command it has generated or the recentering command generated by another module (10b), to be applied to said first series thrustor (2a).

14. The device as claimed in claim 13,
characterized in that the relay (49) of any one (10a) of said two computing modules (10a, 10b) is controlled by the other computing module (10b) monitoring said first module (10a).

15. The device as claimed in one of claims 3 to 14,
characterized in that said modules (10a, 10b) are interconnected by their respective connectors (5) to ensure reciprocal monitoring and recentering of said series thrustors (2a, 2b).

16. The device as claimed in one of the preceding claims, characterized in that it comprises a means (6) for defining an identification code specific to each piloting axis, each module (10a, 10b, 10c) comprising a means for reading said identification code, in order to configure itself as a function of the axis according to which it must pilot, and of the axis it must monitor.

17. The device as claimed in one of claims 3 to 16,
characterized in that it comprises two identical computers (1, 40) each comprising at least two computing modules (10) piloting respectively according to two axes, the piloting according to each axis being simultaneously ensured by two modules (10) respectively belonging to said two computers (1, 40), and which control a trim thrustor (3) and respectively, two series thrustors (2, 41) mounted in series, according to information from two respective sets of sensors (38, 39).
